# EUROPÄISCHE PATENTANMELDUNG

(11) **EP 2 871 394 A1**
(43) Veröffentlichungstag der Anmeldung: **13.05.2015**
(21) Anmeldenummer: 14003623.7
(22) Anmeldetag: 24.10.2014
(51) Int. Cl.: F16K 31/08, F16K 31/12, F16K 31/06

(54) **Ventilanordnung**

(30) Priorität: 09.11.2013 DE 102013018855
(71) Anmelder: FESTO AG & Co. KG, 73734 Esslingen (DE)
(72) Erfinder: Wahl, Thorsten, 72622 Nürtingen (DE); Mayer, Edgar, 71384 Weinstadt (DE); Maier, Matthias, 73252 Lenningen (DE); Bork, Tilman, 12623 Berlin (DE)
(74) Vertreter: Patentanwälte Magenbauer & Kollegen Partnerschaft mbB

(57) **Zusammenfassung**

Es wird eine Ventilanordnung (1) vorgeschlagen, die über eine fluidbetätigte Ventileinheit (2) verfügt, die ein zwischen zwei Schaltstellungen umschaltbares Ventilglied (16) aufweist. Das Ventilglied (16) ist durch eine Permanentmagneteinrichtung (38) mit einer von einer Magnetkraft gebildeten Rückstellkraft (F_{R}) ständig in Richtung der ersten Schaltstellung vorgespannt. Durch Fluidbeaufschlagungsmittel (44), die eine fluidische Betätigungskraft (F_{B}) auf das Ventilglied (16) ausüben, kann das Ventilglied (16) aus der ersten Schaltstellung unter Überwindung der magnetischen Rückstellkraft (F_{R}) in die zweite Schaltstellung umgeschaltet werden. Wird die fluidische Betätigungskraft (F_{B}) entfernt, kehrt das Ventilglied (16) aufgrund der Magnetkraft der Permanentmagneteinrichtung (38) wieder in die erste Schaltstellung zurück.

## Beschreibung

Die Erfindung betrifft eine Ventilanordnung, mit mindestens einer fluidbetätigten Ventileinheit, die Folgendes aufweist:
- ein unter Ausführung einer Umschaltbewegung relativ zu einem Ventilgehäuse wahlweise in einer ersten oder in einer zweiten Schaltstellung positionierbares Ventilglied,
- Rückstellmittel, die unabhängig von der Position des Ventilgliedes ständig eine in Richtung der ersten Schaltstellung orientierte Rückstellkraft auf das Ventilglied ausüben, und
- Fluidbeaufschlagungsmittel, durch die eine in Richtung der zweiten Schaltstellung orientierte fluidische Betätigungskraft auf das Ventilglied ausübbar ist, die das Ventilglied unter Überwindung der Rückstellkraft der Rückstellmittel aus der ersten Schaltstellung in die zweite Schaltstellung bewegen und in der zweiten Schaltstellung halten kann,
- wobei die Rückstellmittel in der Lage sind, das Ventilglied bei nicht vorhandener fluidischer Betätigungskraft aus der zweiten Schaltstellung in die erste Schaltstellung zurückzubewegen und in der ersten Schaltstellung festzuhalten.

Eine aus der DE 42 23 358 C2 bekannte Ventilanordnung dieser Art enthält eine durch Fluidkraft betätigbare Ventileinheit des monostabilen Typs. Ein Ventilglied der Ventileinheit ist relativ zu einem es aufnehmenden Ventilgehäuse unter Ausführung einer Umschaltbewegung linear verschiebbar, um es wahlweise in einer von zwei möglichen Schaltstellungen zu positionieren, in denen es diverse Ventilkanäle in unterschiedlichem Muster miteinander verbindet beziehungsweise voneinander abtrennt. Eine von einer mechanischen Feder gebildete Rückstelleinrichtung beaufschlagt das Ventilglied ständig in Richtung einer ersten Schaltstellung, die eine Grundstellung des Ventilgliedes ist. Mit Hilfe von Fluidbeaufschlagungsmitteln kann das Ventilglied unter Überwindung der Rückstellkraft der Rückstellfeder in eine zweite Schaltstellung umgeschaltet werden. Zu den Fluidbeaufschlagungsmitteln gehören unter anderem eine am Ventilglied ausgebildete Fluidbeaufschlagungsfläche, die durch einen Steuerkanal hindurch mit einem Antriebsfluid beaufschlagbar ist, um eine den Umschaltvorgang bewirkende fluidische Betätigungskraft zu erzeugen. Solange die fluidische Betätigungskraft vorhanden ist, verbleibt das Ventilglied in der zweiten Schaltstellung. Wird das Antriebsfluid abgeschaltet und dadurch die fluidische Betätigungskraft weggenommen, kehrt das Ventilglied aufgrund der von der Federkraft der Rückstellfeder gebildeten Rückstellkraft in die erste Schaltstellung zurück und wird dort so lange gehalten, bis erneut eine fluidische Betätigungskraft erzeugt wird. Eine solche Ventileinheit hat den Vorteil einer einfachen Ansteuerbarkeit und bietet die Sicherheit, dass das Ventilglied in eine definierte Grundstellung zurückschaltet, falls das Antriebsfluid aufgrund einer Störung ausfallen sollte. Dieser Sicherheitsaspekt geht allerdings verloren, falls die Rückstellfunktion der Feder versagt, was beispielsweise nach langer Betriebsdauer aufgrund eines Federbruches geschehen kann.

In der DE 27 29 482 A1 und in der EP 1 760 376 A1 werden bistabile Magneteinheiten vorgeschlagen, die ein zwischen zwei Schaltstellungen umschaltbares Ventilglied enthalten, das in jeder seiner beiden Schaltstellungen festgehalten wird. Die Haltefunktion wird durch zwei Permanentmagneteinrichtungen verwirklicht, die abwechselnd wirksam sind, je nachdem, welche Schaltstellung vorliegt. Das Umschalten zwischen den Schaltstellungen erfolgt in beiden Umschaltrichtungen durch eine Beaufschlagung des Ventilgliedes mit fluidischen Betätigungskräften.

Der Erfindung liegt die Aufgabe zugrunde, eine Ventilanordnung mit mindestens einer Ventileinheit des monostabilen Typs so zu optimieren, dass sie hohen Sicherheitsanforderungen genügt.

Zur Lösung dieser Aufgabe ist in Verbindung mit den eingangs genannten Merkmalen vorgesehen, dass die Rückstellkraft eine Magnetkraft ist, die von wenigstens einer mindestens einen Permanentmagnet enthaltenden Permanentmagneteinrichtung der Rückstellmittel hervorgerufen wird.

Auf diese Weise liegt eine fluidbetätigte Ventileinheit des monostabilen Typs vor, deren Umschaltbewegung durch wahlweise Aufbringung oder Wegnahme einer fluidischen Betätigungskraft hervorrufbar ist, wobei das Ventilglied mittels mindestens einer Permanentmagneteinrichtung in eine als Grundstellung fungierende erste Schaltstellung vorgespannt ist. Die Permanentmagneteinrichtung generiert eine das Ventilglied ständig in Richtung der ersten Schaltstellung beaufschlagende Magnetkraft, die unabhängig davon als Rückstellkraft auf das Ventilglied einwirkt, in welcher Relativposition sich das Ventilglied momentan bezüglich des Ventilgehäuses befindet. Die als Magnetkraft realisierte Rückstellkraft wirkt nicht nur dann, wenn sich das Ventilglied in oder in der Nähe der ersten Schaltstellung befindet, sondern insbesondere auch in der zweiten Schaltstellung, sodass eine Wegnahme der fluidischen Betätigungskraft ausreicht, um das Ventilglied aus der zweiten Schaltstellung allein durch die Magnetkraft in die erste Schaltstellung zurückzubewegen. Da die magnetische Rückstellkraft ohne Materialverformung berührungslos generierbar ist, ergibt sich eine hohe Ausfallsicherheit und damit verbunden der Vorteil, dass das Ventilglied auch noch nach langer Einsatzdauer der Ventilanordnung stets zuverlässig in die erste Schaltstellung zurückschaltet, wenn die fluidische Betätigungskraft bewusst oder ungewollt weggenommen wird. Auf diese Weise erfüllt die erfindungsgemäße Ventilanordnung sehr hohe Sicherheitsstandards.

Vorteilhafte Weiterbildungen der Erfindung gehen aus den Unteransprüchen hervor.

Die an der Erzeugung der fluidischen Betätigungskraft mitwirkenden Fluidbeaufschlagungsmittel enthalten zweckmäßigerweise eine an dem Ventilglied angeordnete Fluidbeaufschlagungsfläche, die gesteuert mit einem geeigneten Antriebsfluid beaufschlagbar ist, beispielsweise mit Druckluft. Das Antriebsfluid wird insbesondere durch einen Steuerkanal hindurch in einen Antriebsraum eingespeist, der von der Fluidbeaufschlagungsfläche nach Art einer beweglichen Wand begrenzt wird, sodass sich das Volumen des Antriebsraumes in Abhängigkeit von der Schaltstellung des Ventilgliedes verändert. Eine insbesondere durch Entlüftung hervorgerufene Druckentlastung des Antriebsraumes bewirkt einen Wegfall der fluidischen Betätigungskraft und hat zur Folge, dass das Ventilglied allein aufgrund der ständig an ihm angreifenden Magnetkraft der Permanentmagneteinrichtung aus einer zuvor eingenommenen zweiten Schaltstellung in die erste Schaltstellung zurückbewegt wird beziehungsweise die erste Schaltstellung aufgrund der ständig anstehenden Magnetkraft so lange beibehält, bis durch Fluidbeaufschlagung der Fluidbeaufschlagungsfläche eine fluidische Betätigungskraft erzeugt wird, die größer ist als die entgegengesetzt wirkende Magnetkraft und eventuell herrschende Reibungskräfte. Ist dies der Fall, schaltet das Ventilglied in die zweite Schaltstellung um.

Die Fluidbeaufschlagungsfläche ist zweckmäßigerweise an einem kolbenartigen Betätigungsabschnitt des Ventilgliedes ausgebildet, der mit einem Steuerabschnitt des Ventilgliedes bewegungsgekoppelt ist, welcher in der Lage ist, je nach Schaltstellung des Ventilgliedes wenigstens zwei Ventilkanäle wahlweise miteinander zu verbinden oder voneinander abzutrennen. Die Funktionalität des Steuerabschnittes ist abhängig vom Anwendungsfall der Ventilanordnung wählbar und resultiert beispielsweise in einer 2/2-Ventilfunktion oder in einer 3/2-Ventilfunktion.

Bei einer alternativen Ausführungsform kann ein die Fluidbeaufschlagungsfläche aufweisender Betätigungsabschnitt des Ventilgliedes auch zumindest teilweise an einem Membrankörper ausgebildet sein.

Die Permanentmagneteinrichtung ist vorzugsweise so ausgebildet, dass die von ihr hervorgerufene magnetische Rückstellkraft eine Zugkraft ist, sodass das Ventilglied durch die Permanentmagneteinrichtung ständig ziehend in Richtung der ersten Schaltstellung beaufschlagt ist. Alternativ hierzu ist aber auch eine Ausführungsform zweckmäßig, bei der die Permanentmagneteinrichtung ausgebildet ist, um eine als Schubkraft auf das Ventilglied einwirkende Magnetkraft zu generieren, sodass das Ventilglied durch die Permanentmagneteinrichtung ständig schiebend in Richtung der ersten Schaltstellung beaufschlagt ist.

Selbstverständlich besteht die Möglichkeit, zwei Permanentmagneteinrichtung vorzusehen, die parallel zueinander bzw. gleichzeitig wirksam sind und von denen die eine eine Zugkraft und die andere eine der Zugkraft überlagerte Schubkraft bezüglich des Ventilgliedes hervorruft.

Um eine ziehende Magnetkraft zu erhalten, genügt es beispielsweise, wenn lediglich am Ventilgehäuse oder am Ventilglied mindestens ein Permanentmagnet angeordnet ist, der mit einem an der jeweils anderen Komponente angeordneten oder ausgebildeten ferromagnetischen Abschnitt kooperiert. Eine weitere zweckmäßige Möglichkeit zur Erzeugung der magnetischen Zugkraft besteht darin, sowohl am Ventilgehäuse als auch am Ventilglied jeweils mindestens einen Permanentmagnet anzuordnen, dessen Polarisierung so gewählt ist, dass sie sich anziehen.

Soll das Ventilglied mittels einer magnetischen Schubkraft in die erste Schaltstellung vorgespannt sein, enthält die Permanentmagneteinrichtung an jeder der relativ zueinander bewegbaren Komponenten mindestens einen Permanentmagnet, wobei die Polarisation in diesem Fall so gewählt ist, dass sich die Permanentmagnete in der Achsrichtung der Umschaltbewegung abstoßen.

Vorzugsweise ist die Ventileinheit so ausgebildet, dass die von den Fluidbeaufschlagungsmitteln erzeugbare fluidische Betätigungskraft im Bereich eines ersten Endabschnittes drückend beziehungsweise schiebend auf das Ventilglied einwirkt. Die für die Erzeugung der magnetischen Rückstellkraft verantwortliche Permanentmagneteinrichtung kann dabei dem gleichen Endabschnitt oder dem entgegengesetzten zweiten Endabschnitt des Ventilgliedes zugeordnet sein. Ebenso besteht die Möglichkeit, zum Beispiel zwei Permanentmagneteinrichtung vorzusehen, die so ausgebildet sind, dass sie funktionell beiden Endabschnitten des Ventilgliedes zugeordnet sind. Zweckmäßigerweise ist die Ventilanordnung mit Anschlagmitteln ausgestattet, die die beiden Schaltstellungen des Ventilgliedes mechanisch exakt vorgeben. Ist die Ventileinheit, was vorzugsweise der Fall ist, nach Art eines Sitzventils ausgebildet, kann mindestens ein dem Ventilglied zugeordneter Ventilsitz unmittelbar als ein Anschlagmittel fungieren.

Ein bevorzugter Aufbau der Ventilanordnung sieht vor, dass das Ventilgehäuse einen mehrteiligen Aufbau hat, wobei es pro Ventileinheit über einen Hülsenkörper verfügt, der in einen Gehäusekörper des Ventilgehäuses insbesondere axial einsetzbar oder eingesetzt ist. Der Hülsenkörper dient zur Aufnahme und/oder Führung des zugeordneten Ventilgliedes. Die gesamte Ventileinheit ist zweckmäßigerweise eine selbstzusammenhaltende Baugruppe, die man als Ventilpatrone bezeichnen könnte und die patronenartig in eine Gehäuseausnehmung des Gehäusekörpers einsetzbar oder eingesetzt ist. Ein und derselbe Gehäusekörper des Ventilgehäuses kann mehrere Gehäuseaus-nehmungen aufweisen, in die jeweils eine patronenartige Ventileinheit eingesetzt ist. Es besteht die Möglichkeit, zwei Gehäuseausnehmungen axial ineinander übergehend auszubilden, um zu erreichen, dass in sie eingesetzte Ventileinheiten bei Bedarf derart aufeinander abgestimmt betreibbar sind, dass sie insgesamt eine höherwertige Ventilfunktion ermöglichen, beispielsweise diejenige eines 5/2-Wegeventils oder eines 5/3-Wegeventils. Alternativ können die Ventileinheiten aber auch individuell und unabhängig voneinander betrieben werden.

Nachfolgend wird die Erfindung anhand der beiliegenden Zeichnung näher erläutert. In dieser zeigen:
- Figur 1: einen Längsschnitt durch eine bevorzugte erste Ausführungsform der erfindungsgemäßen Ventilanordnung, die mit einer ziehend auf das Ventilglied einwirkenden Permanentmagneteinrichtung ausgestattet ist, wobei das Ventilglied bei Einnahme der ersten Schaltstellung gezeigt ist,
- Figur 2: die Ventilanordnung aus Figur 1 in der zweiten Schaltstellung des Ventilgliedes,
- Figur 3: eine weitere Ausführungsform der erfindungsgemäßen Ventilanordnung, bei der die Permanentmagneteinrichtung eine schiebende Magnetkraft auf das Ventilglied ausübt, wobei das Ventilglied bei Einnahme seiner ersten Schaltstellung gezeigt ist, und
- Figur 4: die Ventilanordnung aus Figur 3 in der durch Auferlegung einer fluidischen Betätigungskraft erhaltenen zweiten Schaltstellung des Ventilgliedes.

Sofern im Einzelfall keine anderen Angaben gemacht werden, bezieht sich die nachfolgende Beschreibung auf sämtliche Ausführungsbeispiele.

Die in ihrer Gesamtheit mit Bezugsziffer 1 bezeichnete Ventilanordnung ist mit einer Ventileinheit 2 ausgestattet, die die Funktion eines 2/2-Wegeventils hat. Hiervon abweichend kann die Ventilanordnung 1 aber auch mit anderen Ventilfunktionalitäten realisiert werden, beispielsweise mit einer 3/2-Ventilfunktion.

Die Ventilanordnung 1 enthält ein Ventilgehäuse 3, das bevorzugt mehrteilig konzipiert ist. Es enthält einen äußeren Gehäusekörper 4, in dem eine eine Längsachse 5 aufweisende Gehäuseausnehmung 6 ausgebildet ist, die sich ausgehend von einer Gehäuseöffnung 7 ins Innere des Gehäusekörpers 4 hinein erstreckt. Vorzugsweise ist die Gehäuseausnehmung 6 sacklochartig ausgebildet und an ihrer der Gehäuseöffnung 7 entgegengesetzten Axialseite von einem Wandungsabschnitt des Gehäusekörpers 4 verschlossen.

Zu dem Ventilgehäuse 3 gehört exemplarisch auch ein Hülsenkörper 8, der durch die Gehäuseöffnung 7 hindurch koaxial in die Gehäuseausnehmung 6 eingesetzt ist. An einer Ringstufe 12 des Innenumfangs der Gehäuseausnehmung 6 stützt sich der Hülsenkörper 8 axial in Richtung des Innern der Gehäuseausnehmung 6 ab. In der Gegenrichtung, also axial nach außen hin, ist der Hülsenkörper 8 durch einen ebenfalls in die Gehäuseausnehmung 6 eingesetzten Abschlussdeckel 13 des Ventilgehäuses 3 fixiert, der die Gehäuseausnehmung 6 zugleich auch in der axialen Richtung verschließt. Der Abschlussdeckel 13 ist durch Sicherungsmittel 14, die beispielsweise aus einem Sicherungsring bestehen, gegen Herausfallen aus der Gehäuseausnehmung 6 gesichert.

In einer im Innern des Ventilgehäuses 3 ausgebildeten länglichen Ventilkammer 15, die eine Längsachse 15a aufweist, erstreckt sich ein Ventilglied 16. Das Ventilglied 16 hat eine Längsachse 16a, die mit der Längsachse 15a der Ventilkammer 15 zusammenfällt.

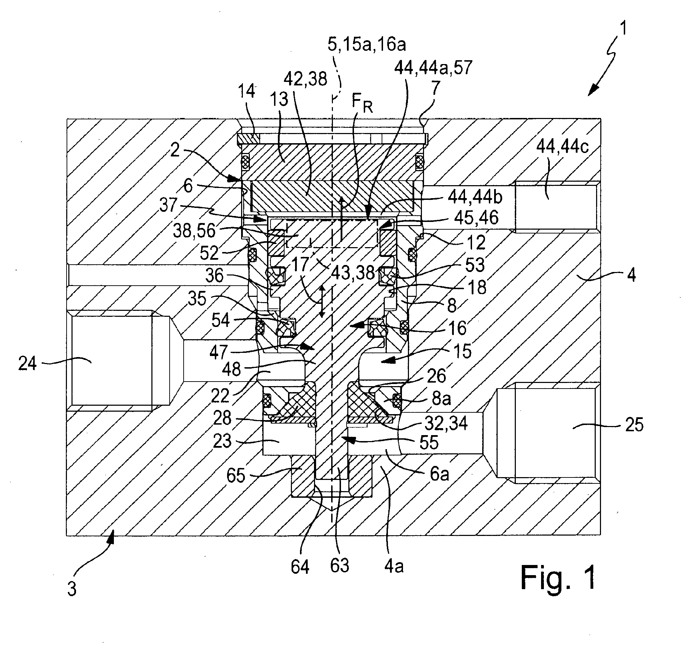

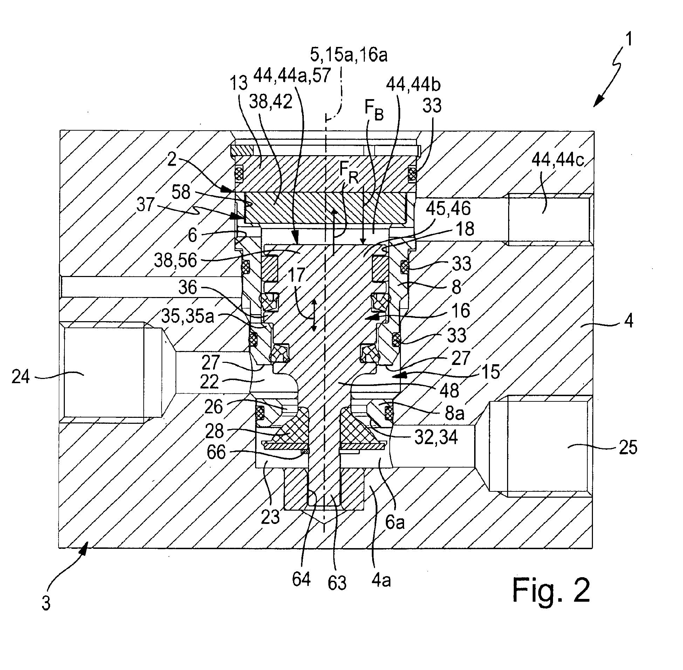

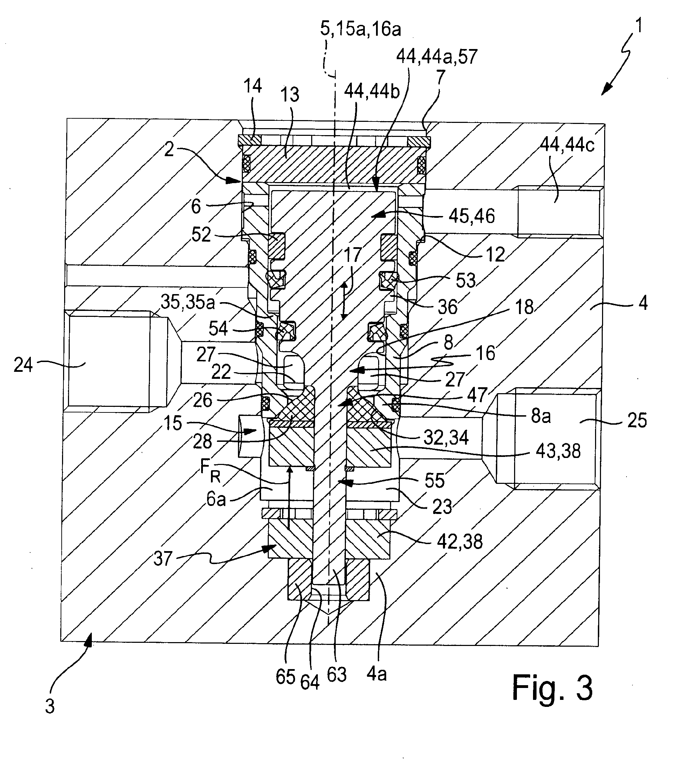

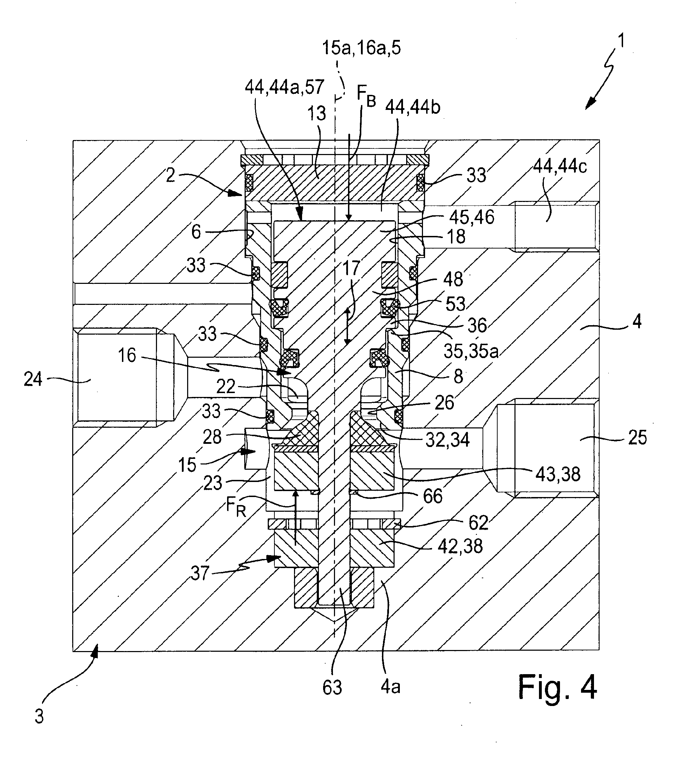

Das Ventilglied 16 ist in der Ventilkammer 15 unter Ausführung einer durch einen Doppelpfeil angedeuteten Umschaltbewegung 17 linear zwischen zwei Schaltstellungen bewegbar. Es handelt sich dabei um eine aus Figuren 1 und 3 ersichtliche erste Schaltstellung und eine aus Figuren 2 und 4 ersichtliche zweite Schaltstellung. Die Umschaltbewegung 17 findet relativ zum Ventilgehäuse 3 statt.

Die Ventilkammer 15 ist beim Ausführungsbeispiel gemeinsam gebildet vom Innenraum 18 des Hülsenkörpers 8 und mindestens einem nicht vom Hülsenkörper 8 eingenommenen Längenabschnitt der Gehäuseausnehmung 6. Vorzugsweise setzt sich die Ventilkammer 15 aus dem Innenraum 18 des Hülsenkörpers 8 und einem inneren Endabschnitt 6a der Gehäuseausnehmung 6 zusammen, der sich axial zwischen dem axial ins Innere der Gehäuseausnehmung 6 weisenden inneren Endabschnitt 8a des Hülsenkörpers 8 und dem die Gehäuseausnehmung 6 an der der Gehäuseöffnung 7 axial entgegengesetzten Innenseite begrenzenden Gehäusewandabschnitt 4a des Gehäusekörpers 4 erstreckt. Das Ventilglied 16 erstreckt sich teils in dem Innenraum 18 und teils in dem inneren Endabschnitt 6a der Gehäuseausnehmung 6.

Vorzugsweise ist das Ventilglied 16 mit dem Hülsenkörper 8 zu einer selbstzusammenhaltenden Baugruppe zusammengefasst, die die Ventileinheit bildet. Bevorzugt ist die Ventileinheit 2 in dieser Ausgestaltung nach Art einer Patrone in die Gehäuseausnehmung 6 eingesetzt. Durch den Abschlussdeckel 13 ist die Ventileinheit 2 in der Gehäuseausnehmung 6 axial fixiert. Im Falle eines Defekts kann die Veritileinheit 2 leicht ausgetauscht werden, indem zuvor der Abschlussdeckel 13 entfernt wird.

Bei einem nicht illustrierten Ausführungsbeispiel enthält das Ventilgehäuse 3 keinen Hülsenkörper 8, sodass die Gehäuseausnehmung 6 unmittelbar selbst die Ventilkammer 15 in ihrer Gesamtheit bildet. Insbesondere bei einem solchen Ausführungsbeispiel sind die Ventilanordnung 1 und die Ventileinheit 2 identisch.

Die Ventilkammer 15 ist durch das Ventilgehäuse 3 axial in mehrere Ventilkammerabschnitte unterteilt, wobei exemplarisch zwei solcher Ventilkammerabschnitte vorhanden sind, die zur besseren Unterscheidung als erster Ventilkammerabschnitt 22 und als zweiter Ventilkammerabschnitt 23 bezeichnet seien. Verfügt das Ventilgehäuse 3 über einen Hülsenkörper 8, befindet sich der erste Ventilkammerabschnitt 22 zweckmäßigerweise in dem Innenraum 18 des Hülsenkörpers 8, während der zweite Ventilkammerabschnitt 23 von dem inneren Endabschnitt 6a der Gehäuseausnehmung 6 gebildet ist. Jeder Ventilkammerabschnitt 22, 23 kommuniziert mit einem das Ventilgehäuse 3 durchsetzenden und zu einer Außenfläche des Ventilgehäuses 3 ausmündenden Ventilkanal, wobei der mit dem ersten Ventilkammerabschnitt 22 kommunizierende Ventilkanal als erster Ventilkanal 24 und der mit dem zweiten Ventilkammerabschnitt 23 kommunizierende Ventilkanal als zweiter Ventilkanal 25 bezeichnet sei.

Zwischen den beiden Ventilkammerabschnitten 22, 23 erstreckt sich ein zur Längsachse 15a der Ventilkammer 15 zweckmäßigerweise koaxialer Überströmabschnitt 26 der Ventilkammer 15. Dieser ist beim Ausführungsbeispiel von dem inneren Endabschnitt 8a des Hülsenkörper gebildet. Ist der Überströmabschnitt 26 offen, stellt er eine Fluidverbindung zwischen den beiden Ventilkammerabschnitten 22, 23 her und erlaubt einen Fluidübertritt zwischen diesen beiden Ventilkammerabschnitten 22, 23.

Damit bei den Ausführungsbeispielen der erste Ventilkammerabschnitt 22 mit dem ersten Ventilkanal 24 ständig kommunizieren kann, ist der Hülsenkörper 8 auf axialer Höhe des ersten Ventilkammerabschnittes 22 mit einer oder mehreren Wanddurchbrechungen 27 versehen.

Das Ventilglied 16 weist einen in dem zweiten Ventilkammerabschnitt 23 angeordneten Verschlusskörper 28 auf. Dieser liegt einem am Ventilgehäuse 3 angeordneten, den Überströmabschnitt 26 umrahmenden Ventilsitz 32 axial, also in Achsrichtung der Längsachse 15a der Ventilkammer 15 gegenüber. Vorzugsweise ist der Ventilsitz 32 konisch oder entsprechend der Fläche einer Kugelzone gestaltet. Der Ventilsitz 32 ist dem Verschlusskörper 28 in der Achsrichtung der Umschaltbewegung 17 zugewandt.

In der ersten Schaltstellung des Ventilgliedes 16 liegt der Verschlusskörper 28 am Ventilsitz 32 unter Abdichtung an und verschließt den Überströmabschnitt 26. Dadurch ist ein Fluidübertritt zwischen den beiden Ventilkammerabschnitten 22, 23 und folglich auch zwischen den beiden Ventilkanälen 24, 25 verhindert.

In der zweiten Schaltstellung nimmt das Ventilglied 16 eine bezüglich der ersten Schaltstellung axial tiefer in der Ventilkammer 15 befindliche Position ein, ist also beim Ausführungsbeispiel näher zu dem Gehäusewandabschnitt 4a des Ventilgehäuses 3 verlagert. Dabei ist der Verschlusskörper 28 von dem Ventilsitz 32 abgehoben und gibt den Überströmabschnitt 26 frei, sodass ein Fluid zwischen den beiden Ventilkammerabschnitten 22, 23 überströmen kann. Da sich das Ventilglied 16 durch den Überströmabschnitt 26 hindurch erstreckt, hat der dem Fluid zur Verfügung stehende Überströmquerschnitt eine ringförmige Gestalt.

Der Verschlusskörper 28 besteht zweckmäßigerweise zumindest in dem in der ersten Schaltstellung am Ventilsitz 32 anliegenden Abschnitt aus einem geeigneten Dichtmaterial, insbesondere aus einem Material mit gummielastischen Eigenschaften.

Aus den bisherigen Erläuterungen ist ersichtlich, dass die Ventileinheit 2 nach Art eines Sitzventils ausgebildet ist. Der Verschlusskörper 28 liegt in wenigstens einer seiner beiden Schaltstellungen an einem in der Achsrichtung der Umschaltbewegung 17 orientierten Ventilsitz 32 axial an.

Da das Ventilglied 16 die Fluidverbindung zwischen den beiden Ventilkammerabschnitten 22, 23 wahlweise absperren oder freigeben kann, liegt eine 2/2-Ventilfunktion vor.

Bei einem nicht gezeigten Ausführungsbeispiel befindet sich in der Ventilkammer 15 mindestens ein weiterer, ebenfalls mit einem eigenen Ventilkanal kommunizierender Ventilkammerabschnitt, der in Abhängigkeit von der Schaltstellung des Ventilglieds 16 ebenfalls wahlweise mit einem benachbarten Ventilkammerabschnitt fluidisch verbindbar oder von diesem benachbarten Ventilkammerabschnitt fluiddicht abtrennbar ist. Dieser weitere Überströmabschnitt kann je nach Platzierung vom gleichen Verschlusskörper 28 wie der bereits erläuterte Überströmabschnitt 26 gesteuert werden oder aber von einem weiteren Verschlusskörper 28 des Ventilgliedes 16. Eine solche Ausgestaltung ermöglicht insbesondere eine 3/2-Ventilfunktion der Ventileinheit 2.

Verfügt das Ventilgehäuse 3 über einen bezüglich des Gehäusekörpers 4 separaten Hülsenkörper 8, sind zwischen den Hülsenkörper 8 und der peripheren Wandfläche der Gehäuseausnehmung 6 zweckmäßigerweise mehrere axial beabstandet zueinander angeordnete ringförmige Dichtelemente 33 vorhanden, die unerwünschte axiale Fluidströmungen zwischen dem Außenumfang des Hülsenkörpers 8 und der Innenumfangsfläche der Gehäuse-ausnehmung 6 verhindern.

Die erste Schaltstellung des Ventilgliedes 16 ist beim Ausführungsbeispiel dadurch definiert, dass das Ventilglied 16 mit seinem Verschlusskörper 28 an dem Ventilsitz 32 anliegt. Folglich bildet der Ventilsitz 32 in diesem Fall ein Anschlagmittel für das Ventilglied 16, das zur besseren Unterscheidung im Folgenden als erstes Anschlagmittel 34 bezeichnet sei.

Auch die zweite Schaltstellung des Ventilgliedes 16 ist zweckmäßigerweise durch ein gehäusefestes Anschlagmittel vorgegeben, das im Folgenden als zweites Anschlagmittel 35 bezeichnet sei. Dieses zweite Anschlagmittel 35 ist exemplarisch von einer ringförmigen Abstufung 35a am Innenumfang der Ventilkammer 15 gebildet, wobei es sich exemplarisch um eine ringförmige Abstufung 35a am Innenumfang des Hülsenkörpers 8 handelt. Das Ventilglied 16 hat einen mit axialem Abstand zu dem Verschlusskörper 28 angeordneten Anschlagabschnitt 36, der der ringförmigen Abstufung 35a axial außen vorgelagert ist und der in der zweiten Schaltstellung an der ringförmigen Abstufung 35a zur Anlage gelangt.

Bei einem nicht gezeigten Ausführungsbeispiel ist das erste Anschlagmittel 34 kein Bestandteil des Verschlusskörpers 28, sondern ein eigenständiger Abschnitt des Ventilgliedes 16. Eine solche Ausgestaltung wird insbesondere dann gewählt, wenn die Ventileinheit 2 - was ebenfalls möglich ist - nicht als Sitzventil konzipiert ist, sondern als Schieberventil mit radial orientierten Ventilsitzen, an denen das Ventilglied 16 zum Verschließen eines Überströmabschnittes von radial innen her anliegt.

Aus den obigen Schilderungen ergibt sich, dass beim Ausführungsbeispiel die erste Schaltstellung eine Schließstellung ist, in der der Überströmabschnitt 26 verschlossen ist. Es versteht sich jedoch, dass die Ventileinheit 2 auch so ausgebildet sein kann, dass die erste Schaltstellung des Ventilgliedes 16 eine den Fluiddurchtritt durch den Überströmabschnitt 26 freigebende Offenstellung ist.

Die Ventilanordnung 1 beziehungsweise die Ventileinheit 2 ist mit Rückstellmitteln 37 ausgestattet, die unabhängig von der momentanen Position des Ventilgliedes 16 eine in Richtung der ersten Schaltstellung orientierte Rückstellkraft F_{R} auf das Ventilglied 16 ausüben. Diese Rückstellkraft F_{R}, die ständig vorhanden ist, ist eine permanentmagnetisch erzeugte Magnetkraft und resultiert von einer Permanentmagneteinrichtung 38 der Rückstellmittel 37, die mindestens einen Permanentmagnet 42, 43 aufweist.

Die Ventilanordnung 1 beziehungsweise die Ventileinheit 2 ist auch mit Fluidbeaufschlagungsmitteln 44 ausgestattet, die es ermöglichen, eine entgegengesetzt zu der magnetisch erzeugten Rückstellkraft F_{R} wirkende fluidische Betätigungskraft F_{B} auf das Ventilglied 16 auszuüben. Diese fluidische Betätigungskraft F_{B} ist in Richtung der zweiten Schaltstellung orientiert.

Die fluidische Betätigungskraft F_{B} ist größer als die Gesamtheit der Kräfte, die das Ventilglied 16 in der ersten Schaltstellung halten. Insbesondere ist die fluidische Betätigungskraft F_{B} größer als die magnetisch erzeugte Rückstellkraft F_{R} und insbesondere auch größer als die Summe aus der Rückstellkraft F_{R} und eventueller zwischen dem Ventilglied 16 und dem Ventilgehäuse 3 auftretender Reibungskräfte.

Die fluidische Betätigungskraft F_{B} ist durch ein Antriebsfluid erzeugbar, mit dem eine an dem Ventilglied 16 ausgebildete Fluidbeaufschlagungsfläche 44a der Fluidbeaufschlagungsmittel 44 beaufschlagbar ist, die in Richtung der ersten Schaltstellung orientiert ist. Die Fluidbeaufschlagungsfläche 44a ist bevorzugt stirnseitig an einem ersten axialen Endabschnitt 45 des Ventilgliedes 16 ausgebildet, der beim Ausführungsbeispiel der Gehäuseöffnung 7 der Gehäuseausnehmung 6 zugewandt ist.

Zweckmäßigerweise ist die Fluidbeaufschlagungsfläche 44a Bestandteil eines kolbenartigen Betätigungsabschnittes 46 des Ventilgliedes 16, der beim Ausführungsbeispiel von dem ersten axialen Endabschnitt 45 gebildet ist.

Der mit dem zweiten Anschlagmittel 35 kooperierende Anschlagabschnitt 36 des Ventilgliedes 16 ist zweckmäßigerweise von dem Betätigungsabschnitt 46 gebildet, der einen größeren Querschnitt oder Durchmesser hat als ein sich axial in Richtung des Innern der Gehäuseausnehmung 6 an den Betätigungsabschnitt 46 anschließender Steuerabschnitt 47 des Ventilgliedes 16, der den Verschlusskörper 28 aufweist.

Das Ventilglied 16 weist zweckmäßigerweise einen Grundkörper 48 auf, der insbesondere einstückig ausgebildet ist und an dem zweckmäßigerweise die Fluidbeaufschlagungsfläche 44a ausgebildet ist. Im Bereich des Betätigungsabschnittes 46 kann der Grundkörper 48 am Außenumfang einen konzentrisch angeordneten Führungsring 52 tragen, der eine leichtgängige Linearführung des Ventilgliedes 16 bezüglich des Ventilgehäuses 3 bewirkt.

Der Grundkörper 48 trägt im Bereich des Betätigungsabschnittes 46 zweckmäßigerweise auch einen konzentrisch angeordneten Dichtungsring 53, der gleitverschieblich an der Innenumfangsfläche der Ventilkammer 15 beziehungsweise des Hülsenkörpers 8 anliegt und der dazu dient, einen der Fluidbeaufschlagungsfläche 44a axial vorgelagerten Antriebsraum 44b der Fluidbeaufschlagungsmittel 44 von demjenigen Bereich der Ventilkammer 15 fluiddicht abzutrennen, in dem sich der Steuerabschnitt 47 erstreckt.

Der Grundkörper 48 ist im Übrigen zweckmäßigerweise im Bereich des Steuerabschnittes 47 mit einem weiteren Dichtungsring 54 versehen, der ebenfalls unter Abdichtung gleitverschieblich an der Innenumfangsfläche der Ventilkammer 15 beziehungsweise des Hülsenkörpers 8 anliegt und der verhindert, dass im Falle eines im ersten Ventilkammerabschnitt 22 herrschenden Überdruckes ein Fluidübertritt zum Antriebsraum 44b stattfindet.

Zu den Fluidbeaufschlagungsmitteln 44 gehört zweckmäßigerweise auch noch ein Steuerkanal 44c, der mit dem Antriebsraum 44b kommuniziert und der das Ventilgehäuse 3 zu einer Außenfläche desselben hin durchsetzt.

Durch den Steuerkanal 44c hindurch kann der Antriebsraum 44b und folglich auch die am Ventilglied 16 ausgebildete Fluidbeaufschlagungsfläche 44a gesteuert mit einem extern bereitgestellten Antriebsfluid beaufschlagt werden. Bei diesem Antriebsfluid handelt es sich insbesondere um Druckluft, was auch für das durch die Ventileinheit 2 steuerbare Druckmedium gilt. Allerdings eignet sich die Ventilanordnung 1 auch für einen Betrieb mit anderen Druckgasen und auch mit Druckflüssigkeiten.

Im Rahmen der erwähnten gesteuerten Fluidbeaufschlagung der Fluidbeaufschlagungsfläche 44a kann ein Antriebsfluid wahlweise in den Antriebsraum 44b eingespeist werden oder aus dem Antriebsraum 44b abgeführt werden. Dadurch wird in dem Antriebsraum 44b entweder ein die fluidische Betätigungskraft F_{B} liefernder Betätigungsdruck angelegt oder der Antriebsraum 44b wird druckmäßig entlastet, insbesondere bis auf Atmosphärendruck. Für die entsprechende Steuerung wird zweckmäßigerweise ein Vorsteuerventil eingesetzt, das zwischen den Steuerkanal 44c und die externe Druckquelle eingeschaltet wird, wobei es sich um ein separates Ventil handeln kann oder auch um einen Bestandteil der Ventilanordnung 1 selbst.

Um das Ventilglied 16 aus der zweiten Schaltstellung in die erste Schaltstellung zurückzuschalten, genügt es, die fluidische Betätigungskraft F_{B} zu entfernen, indem der Antriebsraum 44b druckentlastet wird. Die die Rückstellkraft F_{R} liefernde Magnetkraft ist ausreichend groß bemessen, um ohne Mitwirkung sonstiger Rückstellkräfte die Rückstellbewegung des Ventilgliedes 16 aus der zweiten Schaltstellung in die erste Schaltstellung zu bewirken.

Die Permanentmagneteinrichtung 38 kann derart ausgebildet sein, dass die von ihr hervorgerufene Rückstellkraft F_{R} als Zugkraft auf das Ventilglied 16 einwirkt. Eine solche Wirkungsweise ist bei dem Ausführungsbeispiel der Figuren 1 und 2 realisiert.

Andererseits kann die Permanentmagneteinrichtung 38 aber auch so ausgebildet sein, dass die von ihr hervorgerufene Rückstellkraft F_{R} eine Schubkraft ist und ständig schiebend auf das Ventilglied 16 einwirkt. Eine mögliche Realisierungsform für dieses Konzept illustriert das Ausführungsbeispiel der Figuren 3 und 4.

Eine ziehend wirkende Permanentmagneteinrichtung 38 ist zweckmäßigerweise dem gleichen (ersten) axialen Endabschnitt 45 des Ventilgliedes 16 zugeordnet, in dessen Bereich auch die fluidische Betätigungskraft F_{B} in das Ventilglied 16 eingeleitet wird. Dies trifft auf das Ausführungsbeispiel der Figuren 1 und 2 zu.

Eine mit einer schiebenden beziehungsweise drückenden Magnetkraft auf das Ventilglied 16 einwirkende Permanentmagneteinrichtung 38 ist zweckmäßigerweise einem dem ersten axialen Endabschnitt 45 axial entgegengesetzten zweiten axialen Endabschnitt 55 des Ventilgliedes 16 zugeordnet, was auf das Ausführungsbeispiel der Figuren 3 und 4 zutrifft.

An dieser Stelle sei erwähnt, dass die Permanentmagneteinrichtung 38 auch so ausgeführt sein kann, dass sie sowohl eine ziehende als auch eine drückende Rückstellkraft F_{R} gleichzeitig auf das Ventilglied 16 ausübt. Außerdem können gleichzeitig zwei Permanentmagneteinrichtungen 38 vorhanden sein, die unabhängig voneinander mit dem Ventilglied 16 zusammenwirken. So können beispielsweise die beiden einerseits anhand Figuren 1 und 2 und andererseits anhand Figuren 3 und 4 illustrierten Permanentmagneteinrichtungen 38 gleichzeitig in Verbindung mit ein und derselben Ventileinheit 2 verwirklicht sein. In diesem Falle wäre dann insbesondere eine ziehend wirkende Permanentmagneteinrichtung 38 dem ersten axialen Endabschnitt 45 und eine drückend beziehungsweise schiebend wirkende weitere Permanentmagneteinrichtung 38 dem zweiten axialen Endabschnitt 55 des Ventilgliedes 16 zugeordnet.

Beiden Ausführungsbeispielen ist gemeinsam, dass die Permanentmagneteinrichtung 38 einen Permanentmagnet 42 aufweist, der ortsfest am Ventilgehäuse 3 angeordnet ist. Während allerdings bei dem ziehend wirkenden Ausführungsbeispiel der Figuren 1 und 2 das Ventilglied 16 keinen Permanentmagnet aufweist, ist bei der eine Schubkraft hervorrufenden Permanentmagneteinrichtung 38 der Figuren 3 und 4 auch an dem Ventilglied 16 ein (weiterer) Permanentmagnet 43 angeordnet.

Beim Ausführungsbeispiel der Figuren 1 und 2 ergibt sich die ziehende Magnetkraft der Permanentmagneteinrichtung 38 daraus, dass das Ventilglied 16 in zumindest einem zu der Permanentmagneteinrichtung 38 gehörenden Funktionsabschnitt 56 aus einem ferromagnetischen Material besteht, beispielsweise aus Weicheisen. Das permanente Magnetfeld des am Ventilgehäuse 3 fixierten Permanentmagneten 42 interagiert mit dem ferromagnetischen Funktionsabschnitt 56 und zieht somit diesen Funktionsabschnitt 56 und mithin das gesamte Ventilglied 16 zu sich hin. Der ferromagnetische Funktionsabschnitt 56 ist zweckmäßigerweise von dem Grundkörper 48 des Ventilgliedes 16 gebildet, der entweder bereichsweise oder aber, wie beim Ausführungsbeispiel, in seiner Gesamtheit aus einem ferromagnetischen Material besteht.

Der gehäuseseitig angeordnete Permanentmagnet 42 ist zweckmäßigerweise so platziert, dass er der Stirnfläche 57 des ersten axialen Endabschnittes 45 vorgelagert ist, die zweckmäßigerweise auch die Fluidbeaufschlagungsfläche 44a bildet. Der Permanentmagnet 42 kann so angeordnet sein, dass er einen den Antriebsraum 44b begrenzenden Wandabschnitt bildet. Beim Ausführungsbeispiel ist dies der Fall. Vorteilhaft ist es in diesem Zusammenhang, wenn der Permanentmagnet 42 axial in einen entsprechend gestalteten Aufnahmeabschnitt 58 des Hülsenkörpers 8 eingesetzt ist. Der Permanentmagnet 42 wird in diesem Aufnahmeabschnitt 58 durch den vorgelagerten Abschlussdeckel 13 fixiert. Alternativ oder zusätzlich kann der Permanentmagnet 42 aber auch durch Verkleben, Verrasten oder sonstige Befestigungsmaßnahmen am Hülsenkörper 8 fixiert sein. Auf diese Weise kann der Permanentmagnet 42 ein Bestandteil der patronenartig montierbaren Ventileinheit 2 sein.

Bei dem ferromagnetischen Funktionsabschnitt 56 handelt es sich insbesondere um den der Fluidbeaufschlagungsfläche 44a zugewandten axialen Endabschnitt des Ventilgliedes 16.

Der Permanentmagnet 42 ist beim Ausführungsbeispiel der Figuren 1 und 2 insbesondere scheibenförmig oder plattenförmig gestaltet. Er hat vorzugsweise eine zylindrische Außenkontur.

Allen Permanentmagneten 42, 43 ist zweckmäßigerweise gemeinsam, dass sie axial, also in der Achsrichtung der Umschaltbewegung 17, polarisiert sind.

Bei dem Ausführungsbeispiel der Figuren 1 und 2 ließe sich die ziehende Magnetkraft auch dadurch generieren, dass der Permanentmagnet 42 am Ventilglied 16 angeordnet ist und die Umschaltbewegung 17 mitmacht. Ein mit diesem beweglichen Permanentmagnet 42 kooperierender ferromagnetischer Funktionsabschnitt wäre in diesem Fall ortsfest bezüglich des Ventilgehäuses 3 angeordnet und könnte sogar ein unmittelbarer Bestandteil des Ventilgehäuses 3 sein.

Es besteht ferner die Möglichkeit, die bezüglich des Ventilgliedes 16 ziehende Funktion der Permanentmagneteinrichtung 38 mit zwei Permanentmagneten 42, 43 zu realisieren, wobei ein in diesem Fall zum Einsatz kommender zweiter Permanentmagnet 43 in Figur 1 strichpunktiert angedeutet ist. In diesem Fall befindet sich ein Permanentmagnet 42 am Ventilgehäuse 3 und ein diesbezüglich beweglicher zweiter Permanentmagnet 43 am Ventilglied 16. Die Permanentmagnete 42, 43 sind so ausgebildet und angeordnet, dass sie sich gegenseitig anziehen. Bei axialer Polarisierung sind also ungleichnamige Pole einander zugewandt. Der zweite Permanentmagnet 43 kann insbesondere am oder im Betätigungsabschnitt 46 des Ventilgliedes 16 angeordnet sein.

Bei der Ventilanordnung 1 des Ausführungsbeispiels der Figuren 3 und 4 enthält die Permanentmagneteinrichtung 38 einen ortsfest am Ventilgehäuse 3 angeordneten ersten Permanentmag-net 42 und einen benachbart dazu am Ventilglied 16 angeordneten zweiten Permanentmagnet 43, wobei diese beiden Permanentmagnete 42, 43 derart ausgebildet und angeordnet sind, dass sie sich in der Achsrichtung der Umschaltbewegung 17 gegenseitig abstoßen. Diese Abstoßung ruft die in diesem Fall schiebend auf das Ventilglied 16 einwirkende magnetische Rückstellkraft F_{R} hervor.

Der bezüglich des Ventilgehäuses 3 ortsfeste erste Permanentmagnet 42 ist insbesondere koaxial zum Ventilglied 16 angeordnet und befindet sich exemplarisch in der Gehäuseausnehmung 6 in deren axial innerem Endbereich. Hier ist der erste Permanentmagnet 42 beispielsweise durch einen Sicherungsring 62 oder andere Sicherungsmittel am Ventilgehäuse 3 und insbesondere an dem Gehäusekörper 4 fixiert.

Dem ersten Permanentmagnet 42 in Richtung zu der Gehäuseöffnung 7 axial vorgelagert ist der zweite Permanentmagnet 43 am Ventilglied 16 angeordnet, und zwar insbesondere an dem Steuerabschnitt 47. Vorzugsweise befindet sich der zweite Permanentmagnet 43 in dem inneren Endabschnitt 6a beziehungsweise in dem zweiten Ventilkammerabschnitt 23. In der aus Figur 1 ersichtlichen ersten Schaltstellung ist der axiale, also in Achsrichtung der Umschaltbewegung 17 gemessene Abstand zwischen den beiden Permanentmagneten 42, 43 größer als in der zweiten Schaltstellung des Ventilgliedes 16. Insofern ist die abstoßende Magnetkraft in der zweiten Schaltstellung größer als in der ersten Schaltstellung.

Die beiden Permanentmagnete 42, 43 sind so polarisiert, dass ihre gleichnamigen Polflächen einander zugewandt sind, um den gewünschten Abstoßungseffekt zu erzielen. Exemplarisch sind die beiden Permanentmagnete 42, 43 als zur Längsachse 15a der Ventilkammer 15 koaxial ausgerichtete Ringmagnete ausgebildet. Eine entsprechende Ausgestaltung als Ringmagnete ist im Übrigen auch bei dem anderen Ausführungsbeispiel möglich. Es besteht ferner die Möglichkeit, einen oder beide Permanentmagnete 42, 43 des Ausführungsbeispiels der Figuren 3 und 4 ungelocht als Plattenkörper oder Scheibenkörper auszubilden.

Beiden Ausführungsbeispielen ist eine vorteilhafte Gestaltung des Ventilgliedes 16 gemeinsam, die darin besteht, dass der Grundkörper 48 im Bereich des zweiten axialen Endabschnittes 55 einen sich axial erstreckenden stangenförmigen Zentrierfortsatz 63 aufweist, der axial ins Innere der Gehäuseausnehmung 6 hineinragt. Dieser Zentrierfortsatz 63 taucht in eine im Bereich des Gehäusewandabschnittes 4a angeordnete gehäusefeste Zentrierausnehmung 64 axial gleitverschieblich ein, die unmittelbar in dem Gehäusekörper 4 ausgebildet sein kann, vorzugsweise aber durch einen Führungsring 65 definiert wird, der in das axial innere Ende der Gehäuseausnehmung 6 koaxial eingesetzt ist.

Gemeinsam mit dem Führungsring 65 bewirkt der Zentrierfortsatz 63 eine verkippungssichere Linearführung des Ventilgliedes 16 bezüglich des Ventilgehäuses 3.

Der Führungsring 65 ist in das Ventilgehäuse 3 zweckmäßigerweise eingepresst.

Die Funktion der radialen Führung des Ventilgliedes 16 könnte auch statt des Zentrierfortsatzes 63 zwecks Vermeidung eines Verklemmens - beispielsweise hervorgerufen durch Fremdpartikel - durch geeignete andere Führungselemente ersetzt werden. Denkbar sind unter anderem Tellerfedern oder eine magnetische Zentrierung durch koaxial angeordnete Permanentmagnete, die gleichzeitig auch die Rückstellkraft aufbringen. Zweckmäßigerweise ist bei beiden Ausführungsbeispielen der Verschlusskörper 28 ein ringförmiges Bauteil, das auf den Zentrierfortsatz 63 aufgesteckt und durch Sicherungsmittel 66, beispielsweise ein Sicherungsring, am Grundkörper 48 fixiert ist.

Beim Ausführungsbeispiel der Figuren 3 und 4 ist der ringförmig gestaltete erste Permanentmagnet 42 koaxial zu dem Führungsring 65 angeordnet und auf der dem Ventilglied 16 zugewandten Seite des Führungsringes 65 platziert. Der Zentrierfortsatz 63 ragt axial beweglich durch den ersten Permanentmagnet 42 hindurch, wobei zweckmäßigerweise ein geringer Abstand vorliegt, der eine Berührung verhindert. Der ebenfalls ringförmige zweite Permanentmagnet 43 sitzt auf dem Zentrierfortsatz 63, wobei er sich zweckmäßigerweise in Richtung zu dem ersten Permanentmagnet 42 unmittelbar an den Verschlusskörper 28 anschließt. Zweckmäßigerweise sind der Verschlusskörper 28 und der ringförmige zweite Permanentmagnet 43 gemeinsam durch die vorstehend erwähnten Sicherungsmittel 66 an dem Zentrierfortsatz 63 gehalten.

Ungeachtet des jeweiligen Ausführungsbeispiels kann jeder Permanentmagnet 42, 43 ein einteiliger oder auch ein mehrteiliger Magnetkörper sein. Es besteht auch die Möglichkeit, mindestens einen Permanentmagnet 42, 43 mit einem ferromagnetischen Magnetfeldleitkörper zu kombinieren, der für einen optimierten Verlauf und/oder für eine optimierte Stärke des jeweils erzeugten Magnetfeldes sorgt.

Anstatt einen separaten Permanentmagnet 43 am Ventilglied 16 zu befestigen, kann auch unmittelbar der Grundkörper 48 des Ventilgliedes 16 zumindest bereichsweise und insbesondere in seiner Gesamtheit aus einem permanentmagnetischen Material gefertigt sein und die Funktion des Permanentmagneten 43 übernehmen.

## Patentansprüche

1. Ventilanordnung, mit mindestens einer fluidbetätigten Ventileinheit (2), die Folgendes aufweist:
- ein unter Ausführung einer Umschaltbewegung (17) relativ zu einem Ventilgehäuse (3) wahlweise in einer ersten oder in einer zweiten Schaltstellung positionierbares Ventilglied (16),
- Rückstellmittel (37), die unabhängig von der Position des Ventilgliedes (16) ständig eine in Richtung der ersten Schaltstellung orientierte Rückstellkraft (F_{R}) auf das Ventilglied (16) ausüben, und
- Fluidbeaufschlagungsmittel (44), durch die eine in Richtung der zweiten Schaltstellung orientierte fluidische Betätigungskraft (F_{B}) auf das Ventilglied (16) ausübbar ist, die das Ventilglied (16) unter Überwindung der Rückstellkraft (F_{R}) der Rückstellmittel (37) aus der ersten Schaltstellung in die zweite Schaltstellung bewegen und in der zweiten Schaltstellung halten kann,
- wobei die Rückstellmittel (37) in der Lage sind, das Ventilglied (16) bei nicht vorhandener fluidischer Betätigungskraft (F_{B}) aus der zweiten Schaltstellung in die erste Schaltstellung zurückzubewegen und in der ersten Schaltstellung festzuhalten,
**dadurch gekennzeichnet, dass** die Rückstellkraft (F_{R}) eine Magnetkraft ist, die von wenigstens einer mindestens einen Permanentmagnet (42, 43) enthaltenden Permanentmagneteinrichtung (38) der Rückstellmittel (37) hervorgerufen wird.

2. Ventilanordnung nach Anspruch 1, **dadurch gekennzeichnet, dass** die Fluidbeaufschlagungsmittel (44) eine an dem Ventilglied (16) angeordnete Fluidbeaufschlagungsfläche (44a) aufweisen, die einen Antriebsraum (44b) begrenzt, der mit mindestens einem eine gesteuerte Fluidzufuhr und Fluidabfuhr bezüglich des Antriebsraumes (44b) ermöglichenden Steuerkanal (44c) kommuniziert.

3. Ventilanordnung nach Anspruch 1 oder 2, **dadurch gekennzeichnet, dass** die Permanentmagneteinrichtung (38) derart ausgebildet ist, dass eine von ihr hervorgerufene Rückstellkraft (F_{R}) als Zugkraft ständig ziehend auf das Ventilglied (16) einwirkt.

4. Ventilanordnung nach einem der Ansprüche 1 bis 3, **dadurch gekennzeichnet, dass** die Permanentmagneteinrichtung (38) derart ausgebildet ist, dass eine von ihr hervorgerufene Rückstellkraft (F_{R}) als Schubkraft ständig schiebend auf das Ventilglied (16) einwirkt.

5. Ventilanordnung nach einem der Ansprüche 1 bis 4, **dadurch gekennzeichnet, dass** mindestens ein Permanentmagnet (42) der Permanentmagneteinrichtung (38) ortsfest am Ventilgehäuse (3) angeordnet ist.

6. Ventilanordnung nach einem der Ansprüche 1 bis 5, **dadurch gekennzeichnet, dass** mindestens ein Permanentmagnet (43) der Permanentmagneteinrichtung (38) ortsfest am Ventilglied (16) angeordnet oder unmittelbar vom Ventilglied (16) gebildet ist.

7. Ventilanordnung nach einem der Ansprüche 1 bis 6, **dadurch gekennzeichnet, dass** mindestens ein Permanentmagnet (42) ortsfest am Ventilgehäuse (3) angeordnet ist und mindestens ein weiterer Permanentmagnet (43) ortsfest am Ventilglied (16) angeordnet oder vom Ventilglied (16) gebildet ist.

8. Ventilanordnung nach einem der Ansprüche 1 bis 7, **dadurch gekennzeichnet, dass** das Ventilglied (16) zwei in Richtung der Umschaltbewegung (18) einander entgegengesetzt orientierte erste und zweite axiale Endabschnitte (45, 55) aufweist, wobei die Fluidbeaufschlagungsmittel (44) derart ausgebildet sind, dass die fluidische Betätigungskraft (F_{B}) im Bereich des ersten Endabschnittes (45) wirksam ist.

9. Ventilanordnung nach Anspruch 8, **dadurch gekennzeichnet, dass** die Permanentmagneteinrichtung (38) dem ersten Endabschnitt (45) und/oder dem zweiten Endabschnitt (55) des Ventilgliedes (16) zugeordnet ist.

10. Ventilanordnung nach einem der Ansprüche 1 bis 9, **dadurch gekennzeichnet, dass** das Ventilglied (16) zumindest in dem der Permanentmagneteinrichtung (38) zugeordneten Abschnitt ferromagnetisch ausgebildet ist.

11. Ventilanordnung nach einem der Ansprüche 1 bis 10, **dadurch gekennzeichnet, dass** jede Schaltstellung des Ventilgliedes (16) durch Zusammenwirken des Ventilgliedes (16) mit einem an dem Ventilgehäuse (3) angeordneten Anschlagmittel (34, 35) definiert ist.

12. Ventilanordnung nach einem der Ansprüche 1 bis 11, **dadurch gekennzeichnet, dass** die Ventileinheit (2) einen zum Ventilgehäuse (3) gehörenden Hülsenkörper (8) aufweist, der in einen Gehäusekörper (4) des Ventilgehäuses (3) einsetzbar oder eingesetzt ist und in dem das Ventilglied (16) linear verschiebbar angeordnet ist.

13. Ventilanordnung nach Anspruch 12 in Verbindung mit Anspruch 11, **dadurch gekennzeichnet, dass** jedes Anschlagmittel (34, 35) an dem Hülsenkörper (8) angeordnet ist.

14. Ventilanordnung nach Anspruch 12 oder 13, **dadurch gekennzeichnet, dass** mindestens eine Ventileinheit (2) eine selbstzusammenhaltende Baugruppe ist, die patronenartig in eine Gehäuseausnehmung (6) des Gehäusekörpers (4) einsetzbar oder eingesetzt ist.

15. Ventilanordnung nach einem der Ansprüche 1 bis 14, **dadurch gekennzeichnet, dass** die Ventileinheit (2) nach Art eines Sitzventils ausgebildet ist und einen Verschlusskörper (28) aufweist, der in wenigstens einer der beiden Schaltstellungen des Ventilgliedes (16) an einem in Achsrichtung der Umschaltbewegung (17) orientierten Ventilsitz (32) axial anliegt, wobei der Ventilsitz (32) zweckmäßigerweise ein eine Schaltstellung des Ventilgliedes (16) definierendes Anschlagmittel (34) bildet.
